# EUROPEAN PATENT SPECIFICATION

(11) **EP 3 519 717 B1**
(45) Date of publication and mention of the grant of the patent: **16.08.2023**
(21) Application number: 17780187.5
(22) Date of filing: 29.09.2017
(51) Int. Cl.: F16F 9/06

(54) **A SUSPENSION UNIT**
AUFHÄNGUNGSEINHEIT
UNITÉ DE SUSPENSION

(30) Priority: 29.09.2016 GB 201616549
(43) Date of publication of application: 07.08.2019
(73) Proprietor: Horstman Defence Systems Limited, Bath BA1 3EX (GB)
(72) Inventor: TITLEY, Andrew, Melksham Wiltshire SN12 7FP (GB); D'AUBYN, Robert, Bath BA1 3LH (GB)
(74) Representative: Haseltine Lake Kempner LLP
(86) International application number: PCT/GB2017/052932
(87) International publication number: WO 2018/060730

(56) References cited:
- EP-A1- 2 048 408
- DE-A1- 4 226 754

## Description

The invention relates to a suspension unit.

It is known to provide suspension units for accommodating relative movement between a vehicle body and a ground contact point of a vehicle, such as a wheel. Suspension units are typically configured to provide a spring reaction which is regulated by damping. For example, a spring reaction may be provided by a coil spring, or by a pneumatic spring (i.e. a gas spring). Damping may be implemented by displacement of a liquid through a flow restriction in response to movement of a piston.

An auxiliary spring may be provided to modify the response of a suspension unit over a particular portion of the travel of the suspension unit.

EP 2 048 408 discloses a damper having a body surrounding an annular compression chamber. A hydraulic compensation chamber receives fluid from the compression chamber through a radial opening with variable section during displacement of a control piston. The radial opening is provided in cylindrical internal and external walls of the compression chamber. The internal wall surrounds a cylindrical hollow tube forming a channel. Another channel is arranged between the body and the compression chamber, and hydraulically connects the opening to the channel.

According to a first aspect, there is provided a suspension unit comprising: a body defining a primary chamber for containing a primary fluid; a piston arm having a piston end received in the body to act on primary fluid in the primary chamber, wherein the piston arm is moveable relative the body between at least an extended configuration and a retracted configuration; a first gas spring chamber within the piston arm and a first moveable member to vary a volume of the first gas spring chamber; a second gas spring chamber separate from the piston arm and a second moveable member to vary a volume of the second spring chamber; wherein in at least one of the extended configuration and the retracted configuration of the piston arm, a first damping chamber is defined adjacent the first moveable member and a second damping chamber is defined adjacent the second moveable member; and wherein the first damping chamber and the second damping chamber are each in fluid communication with the primary chamber via a manifold and a common damping passageway defined in the body to receive primary fluid; wherein the manifold is formed in the body, and comprises a damping port corresponding to the common damping passageway, for mutual fluid communication between the first damping chamber, the second damping chamber, and the primary chamber via the common damping passageway; and wherein the first damping chamber is in fluid communication with the second damping chamber via a conduit extending from the manifold through the piston end, the piston end being moveable relative to the conduit.

The first damping chamber may be in fluid communication with the common damping passageway via the conduit extending through the piston end; and the piston end may be moveable relative the conduit.

According to a second aspect, there is provided a suspension unit comprising: a body defining a primary chamber for containing a primary fluid; a piston arm having a piston end received in the body to act on primary fluid in the primary chamber, wherein the piston arm is moveable relative the body between at least an extended configuration and a retracted configuration; a first gas spring chamber within the piston arm and a first moveable member to vary a volume of the first gas spring chamber; a second gas spring chamber separate from the piston arm and a second moveable member to vary a volume of the second gas spring chamber; wherein in at least one of the extended configuration and the retracted configuration of the piston arm, a first damping chamber is defined adjacent the first moveable member and a second damping chamber is defined adjacent the second moveable member; characterized in that the first damping chamber and the second damping chamber are each in fluid communication with the primary chamber via a common damping passageway defined in the piston end to receive primary fluid; wherein the first damping chamber is in fluid communication with the second damping chamber via a conduit extending through the piston end, and wherein the piston end is moveable relative to the conduit; wherein the conduit defines part of a flow pathway between the first damping chamber and the second damping chamber, and wherein a portion of the flow pathway extends through a wall of the body.

In the second aspect, the second damping chamber may be to receive primary fluid from the primary chamber via the first damping chamber.

The second damping chamber may be arranged to receive primary fluid from the primary chamber via the first damping chamber. The second damping chamber may be arranged to receive primary fluid from the primary chamber via the first damping chamber and the conduit extending from the first damping chamber.

The following applies to suspension units in accordance with each of the first and second aspects:
The first damping chamber may be in fluid communication with the primary chamber to receive primary fluid to act on the first moveable member. The second damping chamber may be in fluid communication with the primary chamber to receive primary fluid to act on the second moveable member. Accordingly, in use force transmitted through the primary fluid acts on both the first moveable member and the second moveable member to vary the volumes of the first gas spring chamber and the second gas spring chamber respectively.

Movement of the first moveable member to compress the first gas spring chamber may cause formation or expansion of the first damping chamber. In other words, the first gas spring chamber may be configured so that the first moveable member moves to compress the first gas spring chamber in response to an increase in pressure of primary fluid acting on the first moveable member, so as to form or expand the first damping chamber.

Movement of the second moveable member to compress the second gas spring chamber may cause formation or expansion of the second damping chamber. In other words, the second gas spring chamber may be configured so that the second moveable member moves to compress the second gas spring chamber in response to an increase in pressure of primary fluid acting on the second moveable member, so as to form or expand the first damping chamber.

The piston end may be moveable relative to the conduit. There may be a seal between the piston end and the conduit. For example, the seal may be formed directly between the piston end and the conduit, or a seal element such as an O-ring may act therebetween.

The conduit may be a discrete component assembled to the body. In other words, the conduit may not be integrally formed with the body. The conduit may be threadedly assembled to the body.

The primary chamber may contain a primary fluid, which may be a substantially incompressible liquid, such as an oil. The first gas spring chamber may contain a first compressible gas. The second gas spring chamber may contain a second compressible gas.

The piston arm may be moveable within a travel range relative the body to cause primary fluid to flow between the primary chamber and the first and second damping chambers. The first and second gas spring chambers may be filled such that in use, for at least a portion of the travel range, only one of the first and second moveable members moves in response to movement of the piston arm. In other words, the suspension unit may be commissioned by filling the primary chamber and the first and second gas spring chambers with the respective fluids such that in use, for at least a portion of the travel range, only one of the first and second moveable members moves in response to movement of the piston arm

According to a third aspect, there is provided a method of modifying a suspension unit comprising: a body defining a primary chamber for containing a primary fluid; a piston arm having a piston end received in the body to act on primary fluid in the primary chamber, wherein the piston arm is moveable relative the body between at least an extended configuration and a retracted configuration; a first gas spring chamber within the piston arm and a first moveable member to vary a volume of the first gas spring chamber; a second gas spring chamber separate from the piston arm and a second moveable member to vary a volume of the second gas spring chamber; wherein in at least one of the extended configuration and the retracted configuration of the piston arm, a first damping chamber is defined adjacent the first moveable member and a second damping chamber is defined adjacent the second moveable member; the suspension unit comprising a damping passageway between the primary chamber and the first damping chamber, a flow pathway extending from the second damping chamber to the primary chamber, a portion of the flow pathway extending through a wall of the body; the method comprising: installing a conduit for fluid communication between the first damping chamber and the second damping chamber, such that the second damping chamber is in fluid communication with the primary chamber via the first damping chamber; wherein the conduit is installed to extend the flow pathway into the first damping chamber to bypass the primary chamber; and replacing or modifying the piston end so that the conduit extends therethrough, and such that the piston end is moveable relative to the conduit.

In other words, the suspension unit before modification (the unmodified suspension unit) may comprise a flow pathway between the primary chamber and the second damping chamber. The flow pathway may be configured so that, in the unmodified suspension unit, flow between the primary chamber and the second damping chamber is subject to less damping than flow between the primary chamber and the first damping chamber. In other words, the damping coefficient of the damping passageway between the primary chamber and the first damping chamber may be greater than the damping coefficient of the flow pathway between the primary chamber and the second damping chamber.

The modified suspension unit may be in accordance with the first aspect or the second aspect.

The invention will now be described, by way of example, with reference to the following drawings, in which:
Figure 1 shows a first example suspension unit with a piston arm in the static configuration;
Figure 2 shows the suspension unit of Figure 1 with the piston arm in an extended configuration;
Figure 3 shows the suspension unit of Figure 1 with the piston arm in a retracted configuration;
Figure 4a shows an example force response for displacement of the piston arm of Figure 1;
Figures 4b and 4c show example force responses for displacement of the piston arm of other example suspension units;
Figure 5 shows a second example suspension unit with a piston arm in the static configuration;
Figure 6 shows the suspension unit of Figure 5 with the piston arm in an extended configuration;
Figure 7 shows the suspension unit of Figure 5 with the piston arm in a retracted configuration; and
Figure 8 shows a suspension unit which can be modified in accordance with an embodiment of the invention.

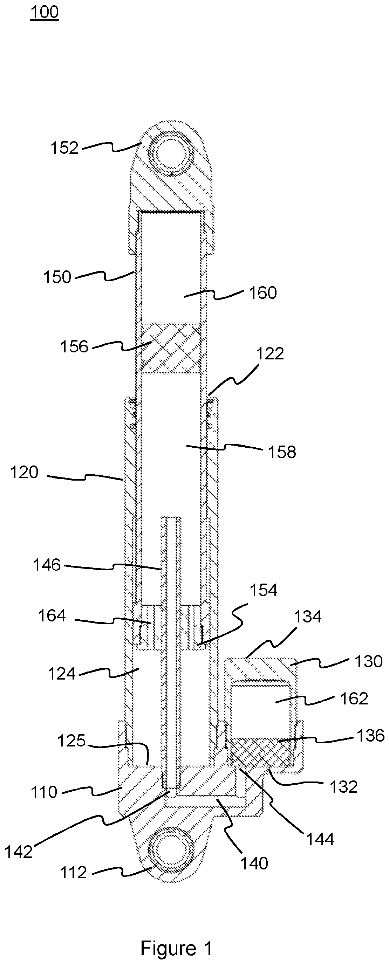

**Figure 1** shows an example suspension unit 100 comprising a body 110 (or housing) and a piston arm 150 slidably received in the body 110. In this example, the body 110 is for coupling to a ground contact point of a vehicle, such as a wheel, and the piston arm 150 is for coupling to a chassis or body of a vehicle. However, in other examples an installed configuration of the suspension unit 100 may be inverted, and the piston arm 150 may be for coupling to a ground contact point. The body 110 and piston arm 150 have respective attachment points 112, 152 for coupling to the ground contact point and vehicle respectively.

In this example, the body 110 comprises a main cylinder 120 defining a cylindrical cavity having a cylindrical wall and a distal open end 122 for slidably receiving the piston arm 150. A primary chamber 124 is defined within the main cylinder 120 between a proximal end wall 125 of the main cylinder 120 (i.e. the end closest to the attachment point 112 in Figure 1, and farthest from the open distal end which receives the piston arm 150) and a piston end 154 of the piston arm 150 received in the main cylinder 120. Accordingly, the volume of the primary chamber 124 varies in use depending on displacement of the piston arm 150 within the main cylinder 120. The primary chamber 124 is for receiving a primary fluid, such as an oil, as will be described in detail below.

The body 110 further comprises an auxiliary cylinder 130 defining a cylindrical cavity and having a cylindrical wall, a proximal end wall 132 (i.e. at the end of the auxiliary cylinder 130 closest to the attachment point 112 in Figure 1) and an opposing distal end wall 134. In this example, the auxiliary cylinder 130 is disposed side-by-side with the main cylinder 120 such that longitudinal axes of the main cylinder 120 and the auxiliary cylinder 130 respectively are parallel to one another and laterally offset. In other examples, the auxiliary cylinder 130 may be positioned differently with respect to the main cylinder 120, for example the two cylinders may be configured in a linear arrangement.

In this example, there is a flow channel 140 extending through the body 110 from a first port 142 in the proximal end wall 125 of the main cylinder 120 and a second port 144 in the proximal end wall 132 of the auxiliary cylinder.

As shown in Figure 1, a conduit 146 is coupled to the body 110 at the first port 142 and extends through the primary chamber 124 within the main cylinder 120 and through the piston end 154 of the piston arm 150. The piston end 154 has an opening for slidably receiving the conduit 146, and a seal is formed between the piston end 154 and the conduit 146. Consequently, the flow channel 140 is extended through the conduit 146 to form a flow pathway from the auxiliary cylinder 130 to the interior of the piston arm 150, bypassing the primary chamber 124. In this example, the conduit is threadedly assembled to the first port 142, but in other examples the conduit may be assembled to the body 110 by other attachment means.

A first moveable member 156 in the form of a rigid disc or piston is installed in the piston arm 150 to partition the interior space of the piston arm 150, and is slidably moveable therein to vary the respective volumes of two chambers on either of its two sides. The first moveable member 156 may be moveable to abut the side of the piston end 154 defining the interior of the piston arm 150, so as to reduce one of the respective chambers to a zero or negligible volume. In this example, the chamber between the first moveable member 156 and the piston end 154 is a first damping chamber 158 configured to receive a primary fluid displaced from the primary chamber 124 through a damping means, as will be described below. The chamber between the first moveable member 156 and the distal end of the piston arm 150 is a first gas spring chamber 160 for receiving a first compressible gas.

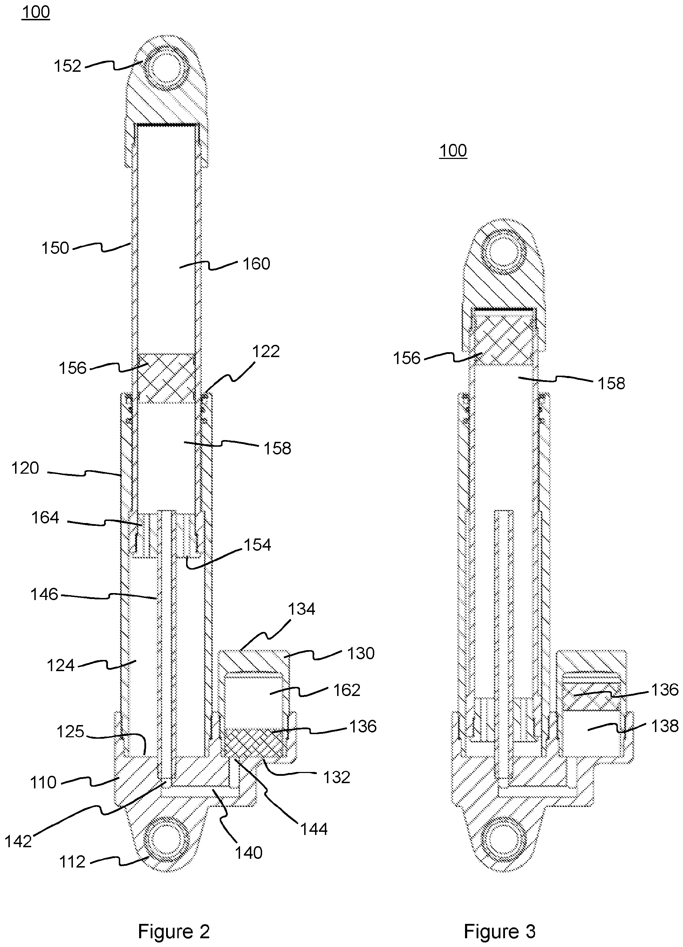

Similarly, a second moveable member 136 is installed in the auxiliary cylinder 130 to partition the interior space of the auxiliary cylinder 130, and is slidably moveable therein to vary the respective volumes of two chambers on either of its two sides. The second moveable member 136 may be moveable to abut the proximal end 132 of the auxiliary cylinder 130, so as to reduce one of the respective chambers to a zero or negligible volume. In this example, the chamber between the second moveable member 136 and the proximal end is a second damping chamber 138 (as best shown in Figure 3) configured to receive primary fluid displaced from the primary chamber 124 through the second port 144, as will be described below. The chamber between the second moveable member 136 and the distal end 134 of the auxiliary cylinder 130 is a second gas spring chamber 162 for receiving a second compressible gas.

In this example, the primary chamber 124 is in fluid communication with the first damping chamber 158 via a damping passageway 164 formed in the piston end 154. For example, the damping passageway 164 may comprise one or more channels or conduits formed through the piston end 154 and configured to restrict flow for damping displacement of the piston arm 150.

Further, in this example, the second damping chamber 138 (see Figure 3) is in fluid communication with the primary chamber 124 via the damping passageway 164 in the piston end 154, the first damping chamber 158 and the flow pathway formed by the conduit 146 and flow channel 140 through the body. Accordingly, in this example, any primary fluid received in the second damping chamber 138 that is originally displaced from the primary chamber 124 passes through the first damping chamber 158 before being received in the second damping chamber 138.

Displacement of the piston will now be described by reference to the suspension unit 100 as commissioned with a primary fluid in the primary chamber 124, a first compressible gas in the first gas spring chamber 160 and a second compressible gas in the second gas spring chamber 162 (i.e. as charged with the primary fluid, first and second compressible gases). For example, the primary fluid may be an oil, such as a mineral or turbine oil, and the first and second compressible gases may be air, nitrogen or an inert gas for example. The gases may be different.

In this example, the primary chamber, first and second gas spring chambers are filled upon commissioning of the suspension unit 100 so that, when subject to a static commissioning load, the suspension unit has a predetermined extension and the first and second gas spring chambers each have a predetermined volume (and associated pressure). This configuration corresponds to the static configuration shown in Figure 1.

In the example static configuration, primary fluid is contained in the primary chamber 124 and the first damping chamber 158. The first moveable member 156 is disposed in a free-floating position between the distal end of the piston arm 150 and the piston end 154, such that the first damping chamber 158 is defined between the first moveable member 156 and the piston end 154 and has a positive volume. Accordingly, the pressure acting on the primary fluid is equal to the pressure in the first gas spring chamber, and any change in the pressure of the primary fluid (e.g. owing to movement of the piston arm 150) will effect movement of the first moveable member 156 to compress or expand the first gas spring chamber 160 accordingly.

In contrast, in this example the suspension unit 100 is commissioned so that, in the static configuration, the pressure of the second gas in the second gas spring chamber 162 is substantially equal to the pressure of the primary fluid and the second moveable member 136 abuts the proximal end 132 of the auxiliary cylinder 130. Accordingly, a reduction in primary fluid pressure (e.g. owing to rebound movement of the piston arm 150) from the static configuration results in no change in the volume of the second gas spring chamber 162, whereas an increase in primary fluid pressure (e.g. owing to jounce movement of the piston arm) from the static configuration results in compression of the second gas spring chamber 162.

Use of the suspension unit will now be described, by way of example, with respect to both rebound (Figure 2) and jounce (Figure 3) movement from the static configuration (Figure 1).

As shown in **Figure 2****,** in rebound there is relative extending movement of the piston arm 150 and body 110 away from one another such that the primary chamber 124 expands to draw in primary fluid. In the static configuration as shown in Figure 1, the first damping chamber 158 has a positive volume whereas the second damping chamber 158 has a zero or negligible volume (since the second moveable member 136 is in abutment with the proximal end 132 of the auxiliary cylinder 130). Accordingly, primary fluid is drawn into the primary chamber 124 from only the first damping chamber 158 (and not from the second damping chamber 138).

The primary fluid is drawn through the damping passageway 164, thereby providing damping of the relative movement of the piston arm 150 and body 110 in rebound.

Further, as the suspension unit 100 extends and primary fluid is drawn out of the first damping chamber 158, the first moveable member 156 moves to expand the first gas spring chamber 160, thereby providing a spring reaction opposing the rebound force that causes extension of the suspension unit. In particular, as the first gas spring chamber 160 expands, the pressure of the first gas received therein reduces.

**Figure 3** shows the suspension unit 100 in a jounce configuration following relative retracting (or compressing) movement between the piston arm 150 and the body 110 from the static configuration (Figure 1).

In jounce, relative retracting movement of the piston arm 150 into the primary cylinder 120 causes the volume of the primary chamber 124 to reduce. Consequently, primary fluid is displaced from the primary chamber 124.

In this example, the port 142 in the proximal end 125 of the primary cylinder 120 is not open for direct fluid communication with the primary chamber, such that the primary fluid is displaced through the damping passageway 164 in the piston end 154 into the first damping chamber 158. The first damping chamber 158 and the second damping chamber 138 are in fluid communication through the flow pathway extending through the conduit 146 and the flow channel 140 (which extends through the body 110). Accordingly, both the first and second damping chambers 158, 138 may receive displaced primary fluid. As explained above, the first moveable member 156 is disposed in a free-floating position in the static configuration, such that an increase in pressure of the primary fluid received in the first damping chamber will cause corresponding compression of the first gas spring chamber 160 and movement of the first moveable member 156. Further, whilst the second moveable member 136 abuts the proximal end 132 of the auxiliary cylinder 130 in the static configuration (i.e. to prevent expansion of the second gas spring chamber 162), the pressure of the primary fluid and the second gas in the second gas spring chamber are substantially in equilibrium in the static configuration (in this example), such that in jounce the second moveable member moves to compress the second gas spring chamber in response to an increase in pressure of the primary fluid (as shown in Figure 3). In other examples, the pressure of the second gas in the second gas spring chamber 162 may be greater than the pressure of the primary fluid such that the second moveable member 136 abuts the proximal end 132 of the auxiliary cylinder 130 for at least a portion of jounce travel from the static configuration.

Therefore, in this example, the first gas spring chamber provides a gas spring reaction for both rebound and jounce, whereas the second gas spring chamber provides a supplementary gas spring reaction in jounce only. This may enable the gas spring response to be optimised differently for jounce and rebound.

The suspension unit is configured so that both the first and second damping chambers 158, 138 (which act on the respective gas spring chambers 160, 162), are in fluid communication with the primary chamber 124 for displacement of primary fluid through the same damping passageway 164. In previously considered arrangements, an auxiliary cylinder may be provided to effect a second gas spring response without damping of fluid passing to and from the auxiliary cylinder. However, such arrangements may result in an underdamped spring-damper reaction. In particular, such arrangements may be underdamped in jounce, where only part of the motive fluid acted on by a piston arm (e.g. oil) passes through the damper. Accordingly, the vehicle body may be susceptible to excessive roll and pitch, and there may be excessive bump stop events, inducing excessive vibration.

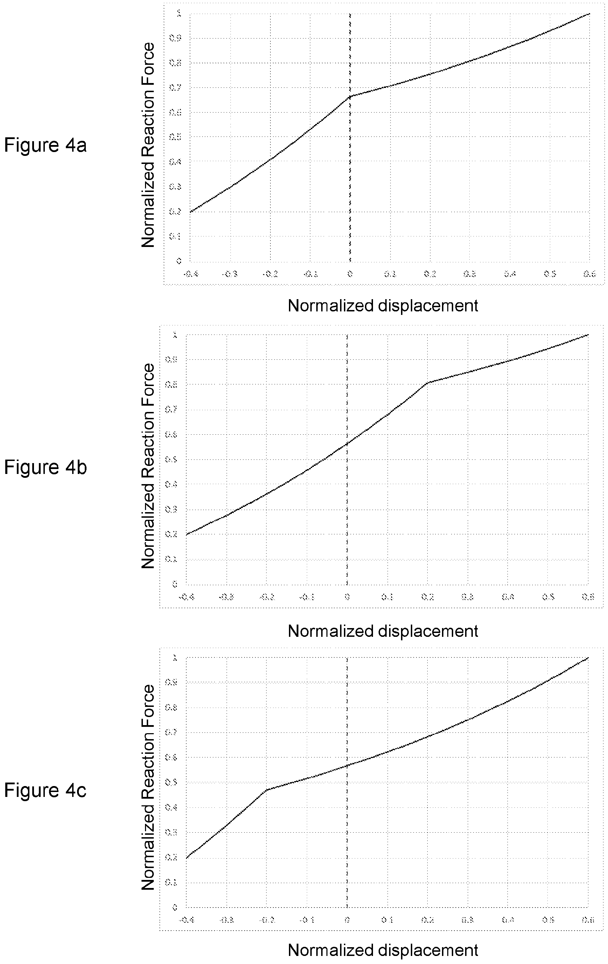

**Figure 4a** shows an example plot of a force versus displacement relationship for the suspension unit 100 of Figures 1-3. The lateral axis corresponds to the normalized travel range of the suspension unit (i.e. relative movement between the piston arm 150 and the body 11), with the lowest values corresponding to rebound (i.e. extension) and the highest values corresponding to jounce (i.e. compression), and a zero value corresponding to the static configuration. The vertical axis corresponds to the normalized reaction force.

In this particular example, the first gas spring has an active range corresponding to the full travel of the suspension unit, whereas the second gas spring has an active range corresponding to the jounce portion of travel. Consequently, as shown in Figure 4a, in the rebound portion of travel, the relationship corresponds to a reaction provided by a single gas spring (i.e. the first gas spring chamber 160), whereas in the jounce portion of travel, the relationship corresponds to a reaction provided by the two gas springs (i.e. compression of the first gas spring chamber 160 and the second gas spring chamber 162). The point along the travel of the suspension unit (from rebound to jounce) where the second gas spring chamber becomes active is referred to as the activation point for the second gas spring. The activation point for the second gas spring can be observed by the change in gradient at and beyond the static configuration, represented by the vertical line on the plot.

Accordingly, in this example the activation point for the second gas spring corresponds to the static configuration of the suspension unit. In other examples, the suspension unit may be commissioned so that the activation point for the second gas spring is located in the jounce or rebound portions of travel of the suspension unit. In particular, selecting a pressure in the second gas spring chamber changes where it starts to act (i.e. be compressed). For example, the activation point may be about 50mm towards jounce from the static configuration (as shown in **Figure 4b**). It may also be located towards rebound from the static configuration (as shown in **Figure 4c**).

Whilst examples have been described in which the first gas spring has an active range corresponding to the range of travel of the suspension unit (i.e. such that the travel of the first moveable member is not stopped at an intermediate point of the travel of the piston arm), it will be appreciated that in other examples the active range of the first gas spring and/or the second gas spring may correspond to a truncated range of the travel of the suspension unit. For example, a stop may be provided to limit compression to truncate the range of travel. Further, a stop may be provided to limit extension to truncate the range of travel, or the respective chamber may be commissioned (i.e. charged) at a pressure so as to limit the extension. Further, the active ranges of the first and second gas spring chambers may overlap or be contiguous.

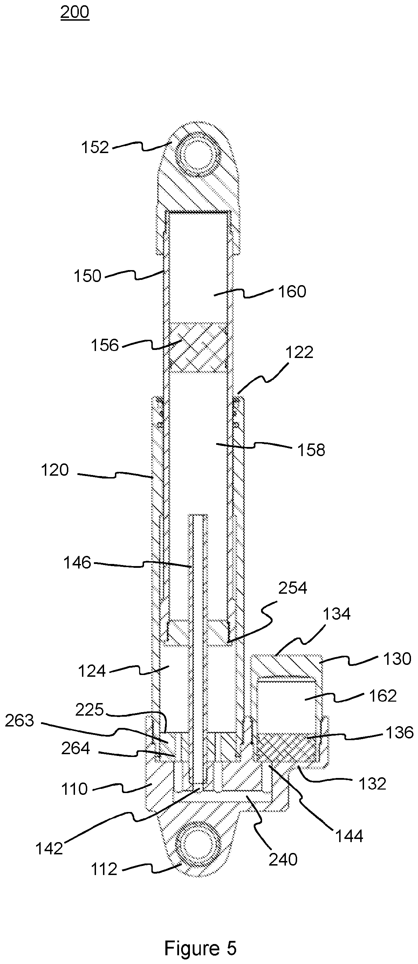

**Figures 5-7** show a second example suspension unit 200 in static, rebound and jounce configurations respectively.

The second example suspension unit 200 differs from the first example suspension unit 100 described above in the location of the common damping passageway and the fluid communication between the respective chambers. Like reference numerals are used for features which are common between the two examples, whereas reference numerals of greater than 200 are used for features which differ in the second example.

In the second example suspension unit 200, the piston arm 150 has a piston end 254 which differs from the piston end 154 described above with respect to the first example suspension unit 100 in that there is no damping passageway for fluid communication between the primary chamber 124 and the first damping chamber 158 through the piston end 254. As in the first example, the piston end 254 has an opening for slidably receiving the conduit 146, and a seal is formed between the piston end 254 and the conduit 146. However, this opening does not provide for direct fluid communication between the primary chamber 124 and the first damping chamber 158.

Further, in the second example suspension unit 200, a damping assembly 263 is installed in the primary cylinder 120 and there is a corresponding flow manifold 240 (which replaces the flow channel 140 of the first example suspension unit), as described in detail below. In this example, the damping assembly 263 is in the form of a disc installed against the proximal end of the primary cylinder 120 and serving as an extension of the body 110. Accordingly, a surface of the damping assembly 263 exposed to the primary chamber 124 forms the proximal end wall 225 of the primary cylinder 120 which delimits the primary chamber 124.

The damping assembly 263 has a damping passageway 264 for conveying primary fluid to and from the primary chamber 124 in response to extension and retraction of the suspension unit 200. There may be a plurality of damping passageways 263. The damping assembly 263 further comprises a central opening through which the conduit 146 extends.

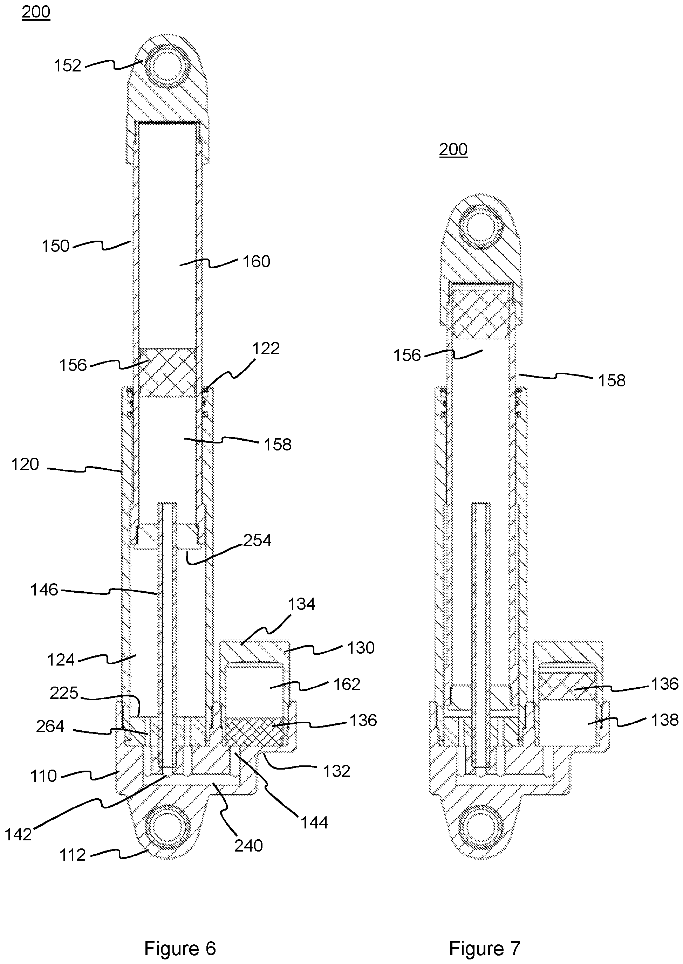

The flow manifold 240 is formed in the body 110 for fluid communication between the primary chamber 124 and the first and second damping chambers 158, 138. In this example, the flow manifold 240 has one or more damping ports corresponding to the one or more damping passageways 264 of the damping assembly 263, for fluid communication with the primary chamber 124 via the respective damping passageways. Further, the flow manifold 240 comprises a first port 142 coupled to the conduit 146 as described above with respect to the first example suspension unit 100. Further, the flow manifold 240 comprises a second port 144 in the proximal end wall 132 of the auxiliary cylinder 130 for fluid communication with the second damping chamber 138 (see Figure 7). The flow manifold has a common flow channel configured so that the damping ports, first port 142 and second port 144 are in mutual fluid communication.

Accordingly, both the first and second damping chambers 158, 138 are in fluid communication with the primary chamber 124 via the damping assembly 263 (i.e. via the or each damping passageway 264). The first and second damping chambers 158, 138 are also in fluid communication with each other via the conduit 146 and the flow manifold 240.

Figure 5 shows the second example suspension unit in the static configuration. Figure 6 shows the second example suspension unit in a rebound configuration. Figure 7 shows the second example suspension unit in a jounce configuration.

In rebound (Figure 6) from the static configuration (Figure 5), primary fluid is displaced from the first damping chamber 158 into the primary chamber 124 via the conduit 146 and the manifold 240. The first moveable member 156 moves to provide a spring reaction force as described above, whereas the second moveable member 136 remains in abutment with the proximal end 132 of the auxiliary cylinder 130.

In jounce (Figure 7) from the static configuration (Figure 5), primary fluid is displaced from the primary chamber 124 through the damping passageway 264 in the damping assembly 263, and through the flow manifold 240 to the first and second damping chambers 158, 138 respectively. Primary fluid flows to the first damping chamber 158 form the manifold via the conduit 146. The primary and secondary damping chambers 158, 138 receive the primary fluid to compress the respective first and second gas spring chambers 160, 162.

Although the second example suspension unit 200 includes a discrete damping assembly 263 which is installed in the primary cylinder 120, it will be appreciated that in other examples, damping passageways may be formed in the body 110.

A suspension unit as described herein may be manufactured by retrofitting an existing suspension unit with a conduit such that the first and second damping chambers are in fluid communication with a primary chamber via a common damping means.

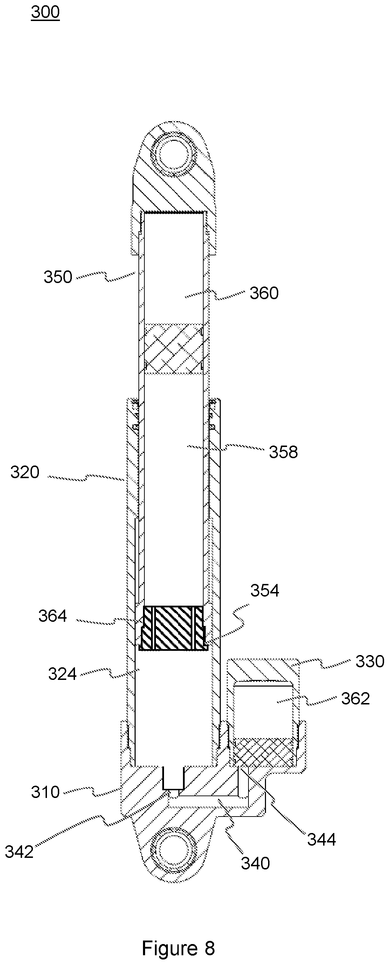

As shown in **Figure 8****,** an unmodified suspension unit 300 comprises a body 310 defining a main cylinder 320 having a primary chamber 324, an auxiliary cylinder 330, first and second gas spring chambers 360, 362 and first and second damping chambers substantially as described above. The unmodified suspension unit has a piston arm 350 received in the body 310 and having a piston end 354 comprising a damping passageway 364. There is a flow channel 340 extending through the body 310 from a first port 342 into the primary chamber 324 to a second port 344 into the auxiliary cylinder 330 for communication with a second damping chamber. The unmodified suspension unit 300 is commissioned with primary fluid, first and second compressible gases as described above.

The unmodified suspension unit 300 is shown in Figure 8 in a static configuration. As will be appreciated, compression (retraction) of the piston arm in jounce will result in primary fluid flowing through the damping passageway 164 into the first damping chamber 358 in the piston arm and also directly from the primary chamber 324 to a second damping chamber in the auxiliary cylinder 330 via the flow channel 340, without damping.

To modify the suspension unit, the piston end 354 is modified to form an opening for receiving a conduit 146 as described above (and as shown in Figure 1), or is replaced with a piston end 154 (as shown in Figure 1) having such an opening, as described above with respect to the first and second example suspension units 100, 200 of Figures 1 and 5. The conduit 146 is installed in the main cylinder 320 to extend the flow channel 340 from the first port 342 through the piston end 154 into the first damping chamber 358, thereby forming a flow path between the first and second damping chambers. Accordingly, in the modified suspension unit, the first and second damping chambers are in fluid communication with the primary chamber 324 via the common damping passageway formed in the piston end 154. In particular, any primary fluid received in the second damping chamber from the primary chamber flows through the damping passageway in the piston end 154, through the first damping chamber 358, the conduit 146 and flow channel 140 to reach the second damping chamber in the auxiliary cylinder 330.

Although examples of the invention have been described in which the body comprises first and second cylinders in which the respective chambers are defined, it will be appreciated that the parts of the body may be of any suitable shape. For example, the first and second cylinders may instead be of any suitable shape, such as cuboidal.

Further, whilst examples of the invention have been described in which there is a second cylinder arranged side by side with the first cylinder, it will be appreciated that other arrangements are possible, and such arrangements primarily depend on the space available in the installed location. For example, the suspension unit may be have a linear arrangement in which the second damping chamber and gas spring are substantially coaxial with the primary chamber and the piston arm. Such an arrangement may be narrower and have a greater linear extent than the examples described above.

Whilst examples of the invention have been described which relate to suspension units for vehicles, it will be appreciated that the suspension unit is suitable for other applications, such as seating for off-road and marine vehicles, recoil buffers and motion control systems.

Examples have been described herein in which a chamber, such as a damping chamber, is formed in some configurations of the suspension unit and has a negligible or zero volume in other configurations by closure or abutment of opposing walls that define the respective chamber. References to such chambers being in fluid communication with a further chamber may be interpreted to mean that fluid may be received to reform the chamber. In other words, the respective abutting walls, when closed to reduce the volume to negligible or zero, may separate to receive the respective fluid and define the respective chamber.

## Claims

1. A suspension unit (200) comprising:
a body (110) defining a primary chamber (124) for containing a primary fluid;
a piston arm (150) having a piston end (154) received in the body to act on primary fluid in the primary chamber, wherein the piston arm is moveable relative the body between at least an extended configuration and a retracted configuration;
a first gas spring chamber (160) within the piston arm and a first moveable member (156) to vary a volume of the first gas spring chamber;
a second gas spring chamber (162) separate from the piston arm and a second moveable member (136) to vary a volume of the second gas spring chamber;
wherein in at least one of the extended configuration and the retracted configuration of the piston arm, a first damping chamber (158) is defined adjacent the first moveable member and a second damping chamber (138) is defined adjacent the second moveable member;
**characterized in that** the first damping chamber and the second damping chamber are each in fluid communication with the primary chamber via a manifold (240) and a common damping passageway (264) defined in the body to receive primary fluid;
wherein the manifold is formed in the body, and comprises a damping port corresponding to the common damping passageway, for mutual fluid communication between the first damping chamber, the second damping chamber, and the primary chamber via the common damping passageway; and
wherein the first damping chamber is in fluid communication with the second damping chamber via a conduit (146) extending from the manifold through the piston end, the piston end being moveable relative to the conduit.

2. A suspension unit (100) comprising:
a body (110) defining a primary chamber (124) for containing a primary fluid;
a piston arm (150) having a piston end (154) received in the body to act on primary fluid in the primary chamber, wherein the piston arm is moveable relative the body between at least an extended configuration and a retracted configuration;
a first gas spring chamber (160) within the piston arm and a first moveable member (156) to vary a volume of the first gas spring chamber;
a second gas spring chamber (162) separate from the piston arm and a second moveable member (136) to vary a volume of the second gas spring chamber;
wherein in at least one of the extended configuration and the retracted configuration of the piston arm, a first damping chamber (158) is defined adjacent the first moveable member and a second damping chamber (138) is defined adjacent the second moveable member;
**characterized in that** the first damping chamber and the second damping chamber are each in fluid communication with the primary chamber via a common damping passageway (164) defined in the piston end to receive primary fluid;
wherein the first damping chamber is in fluid communication with the second damping chamber via a conduit (146) extending through the piston end, and wherein the piston end is moveable relative to the conduit;
wherein the conduit defines part of a flow pathway between the first damping chamber and the second damping chamber, and wherein a portion (140) of the flow pathway extends through a wall of the body.

3. A suspension unit (100) according to claim 2, wherein the second damping chamber is arranged to receive primary fluid from the primary chamber via the first damping chamber.

4. A suspension unit (100, 200) according to any preceding claim, wherein movement of the first moveable member to compress the first gas spring chamber causes formation or expansion of the first damping chamber.

5. A suspension unit (100, 200) according to any preceding claim, wherein movement of the second moveable member to compress the second gas spring chamber causes formation or expansion of the second damping chamber.

6. A suspension unit (100, 200) according to any preceding claim, wherein there is a seal between the piston end and the conduit.

7. A suspension unit (100, 200) according to any preceding claim, wherein the conduit is a discrete component assembled to the body.

8. A suspension unit (100, 200) according to any preceding claim, wherein the conduit is threadedly assembled to the body.

9. A suspension unit (100, 200) according to any preceding claim, wherein the primary chamber contains a primary fluid; the first gas spring chamber contains a first compressible gas; and the second gas spring chamber contains a second compressible gas.

10. A suspension unit (100, 200) according to claim 9, wherein the piston arm is moveable within a travel range relative the body to cause primary fluid to flow between the primary chamber and the first and second damping chambers, and wherein the first and second gas spring chambers are filled such that in use, for at least a portion of the travel range, only one of the first and second moveable members moves in response to movement of the piston arm.

11. A suspension unit (100, 200) according to any preceding claim, wherein the body comprises a main cylinder (120) comprising the primary chamber and an auxiliary cylinder (130) comprising the second gas spring chamber (162) and the second damping chamber (138), wherein the manifold (240) or the portion (140) of the flow pathway extends through a wall of the body between the main cylinder (120) and the auxiliary cylinder (130).

12. A suspension unit (100, 200) according to claim 11, wherein the main cylinder (120) and the auxiliary cylinder (130) are disposed side-by-side.

13. A suspension unit (100, 200) according to claim 12, wherein the manifold (240) or the portion (140) of the pathway extends between a port in a proximal end wall (125) of the main cylinder (120) which opposes a distal end of the primary cylinder that receives the piston arm and a port in a proximal end wall of the auxiliary cylinder.

14. A method of modifying a suspension unit (300) comprising:
a body (310) defining a primary chamber (324) for containing a primary fluid;
a piston arm (350) having a piston end (354) received in the body to act on primary fluid in the primary chamber, wherein the piston arm is moveable relative the body between at least an extended configuration and a retracted configuration;
a first gas spring chamber (360) within the piston arm and a first moveable member to vary a volume of the first gas spring chamber;
a second gas spring chamber (362) separate from the piston arm and a second moveable member to vary a volume of the second gas spring chamber;
wherein in at least one of the extended configuration and the retracted configuration of the piston arm, a first damping chamber (358) is defined adjacent the first moveable member and a second damping chamber is defined adjacent the second moveable member;
the suspension unit comprising a damping passageway (364) between the primary chamber and the first damping chamber; and
**characterized by** comprising a flow pathway extending from the second damping chamber to the primary chamber, a portion (340) of the flow pathway extending through a wall of the body;
the method comprising:
installing a conduit (146) for fluid communication between the first damping chamber and the second damping chamber, such that the second damping chamber is in fluid communication with the primary chamber via the first damping chamber;
wherein the conduit (146) is installed to extend the flow pathway into the first damping chamber to bypass the primary chamber; and
replacing or modifying the piston end (354) so that the conduit (164) extends therethrough, and such that the piston end is moveable relative to the conduit.

15. A method according to claim 14, wherein the modified suspension unit is in accordance with any of claims 1 to 13.

## Patentansprüche

1. Aufhängungseinheit (200), umfassend:
einen Körper (110), der eine Primärkammer (124) zum Aufnehmen eines Primärfluids definiert;
einen Kolbenarm (150) mit einem Kolbenende (154), das in dem Körper aufgenommen ist, um auf das Primärfluid in der Primärkammer einzuwirken, wobei der Kolbenarm relativ zu dem Körper zwischen mindestens einer ausgefahrenen Konfiguration und einer eingefahrenen Konfiguration bewegbar ist;
eine erste Gasfederkammer (160) innerhalb des Kolbenarms und ein erstes bewegbares Element (156), um ein Volumen der ersten Gasfederkammer zu verändern;
eine zweite Gasfederkammer (162), die von dem Kolbenarm getrennt ist, und ein zweites bewegbares Element (136), um das Volumen der zweiten Gasfederkammer zu verändern;
wobei in mindestens einer von der ausgefahrenen Konfiguration und der eingefahrenen Konfiguration des Kolbenarms eine erste Dämpfungskammer (158) angrenzend an das erste bewegbare Element definiert ist und eine zweite Dämpfungskammer (138) angrenzend an das zweite bewegbare Element definiert ist;
**dadurch gekennzeichnet, dass** die erste Dämpfungskammer und die zweite Dämpfungskammer jeweils über einen Verteiler (240) und einen gemeinsamen Dämpfungsdurchgang (264), der in dem Körper zum Aufnehmen von Primärfluid definiert ist, in Fluidverbindung mit der Primärkammer stehen;
wobei der Verteiler in dem Körper ausgebildet ist und eine dem gemeinsamen Dämpfungsdurchgang entsprechende Dämpfungsöffnung für eine gegenseitige Fluidverbindung zwischen der ersten Dämpfungskammer, der zweiten Dämpfungskammer und der Primärkammer über den gemeinsamen Dämpfungsdurchgang umfasst; und
wobei die erste Dämpfungskammer mit der zweiten Dämpfungskammer über eine Leitung (146) in Fluidverbindung steht, die sich von dem Verteiler durch das Kolbenende erstreckt, wobei das Kolbenende relativ zu der Leitung bewegbar ist.

2. Aufhängungseinheit (100), umfassend:
einen Körper (110), der eine Primärkammer (124) zum Aufnehmen eines Primärfluids definiert;
einen Kolbenarm (150) mit einem Kolbenende (154), das in dem Körper aufgenommen ist, um auf das Primärfluid in der Primärkammer einzuwirken, wobei der Kolbenarm relativ zu dem Körper zwischen mindestens einer ausgefahrenen Konfiguration und einer eingefahrenen Konfiguration bewegbar ist;
eine erste Gasfederkammer (160) innerhalb des Kolbenarms und ein erstes bewegbares Element (156), um ein Volumen der ersten Gasfederkammer zu verändern;
eine zweite Gasfederkammer (162), die von dem Kolbenarm getrennt ist, und ein zweites bewegbares Element (136), um das Volumen der zweiten Gasfederkammer zu verändern;
wobei in mindestens einer von der ausgefahrenen Konfiguration und der eingefahrenen Konfiguration des Kolbenarms eine erste Dämpfungskammer (158) angrenzend an das erste bewegbare Element definiert ist und eine zweite Dämpfungskammer (138) angrenzend an das zweite bewegbare Element definiert ist;
**dadurch gekennzeichnet, dass** die erste Dämpfungskammer und die zweite Dämpfungskammer jeweils über einen im Kolbenende definierten gemeinsamen Dämpfungsdurchgang (164) in Fluidverbindung mit der Primärkammer stehen, um Primärfluid zu empfangen;
wobei die erste Dämpfungskammer mit der zweiten Dämpfungskammer über eine sich durch das Kolbenende erstreckende Leitung (146) in Fluidverbindung steht und wobei das Kolbenende relativ zu der Leitung bewegbar ist;
wobei die Leitung einen Teil eines Strömungsweges zwischen der ersten Dämpfungskammer und der zweiten Dämpfungskammer definiert und wobei sich ein Teil (140) des Strömungsweges durch eine Wand des Körpers erstreckt.

3. Aufhängungseinheit (100) gemäß Anspruch 2, wobei die zweite Dämpfungskammer dazu angeordnet ist, Primärfluid aus der Primärkammer über die erste Dämpfungskammer zu empfangen.

4. Aufhängungseinheit (100, 200) gemäß einem der vorhergehenden Ansprüche, wobei die Bewegung des ersten bewegbaren Elements zum Zusammendrücken der ersten Gasfederkammer die Bildung oder Ausdehnung der ersten Dämpfungskammer bewirkt.

5. Aufhängungseinheit (100, 200) gemäß einem der vorhergehenden Ansprüche, wobei die Bewegung des zweiten bewegbaren Elements zum Zusammendrücken der zweiten Gasfederkammer die Bildung oder Ausdehnung der zweiten Dämpfungskammer bewirkt.

6. Aufhängungseinheit (100, 200) gemäß einem der vorhergehenden Ansprüche, wobei eine Dichtung zwischen dem Kolbenende und der Leitung vorhanden ist.

7. Aufhängungseinheit (100, 200) gemäß einem der vorhergehenden Ansprüche, wobei die Leitung ein eigenständiges Bauteil ist, das an den Körper montiert ist.

8. Aufhängungseinheit (100, 200) gemäß einem der vorhergehenden Ansprüche, wobei die Leitung mit dem Körper verschraubt ist.

9. Aufhängungseinheit (100, 200) gemäß einem der vorhergehenden Ansprüche, wobei die Primärkammer ein Primärfluid enthält; die erste Gasfederkammer ein erstes komprimierbares Gas enthält; und die zweite Gasfederkammer ein zweites komprimierbares Gas enthält.

10. Aufhängungseinheit (100, 200) gemäß Anspruch 9, wobei der Kolbenarm innerhalb eines Bewegungsbereichs relativ zum Körper bewegbar ist, um zu bewirken, dass Primärfluid zwischen der Primärkammer und der ersten und zweiten Dämpfungskammer strömt, und wobei die erste und zweite Gasfederkammer so gefüllt sind, dass sich als Reaktion auf die Bewegung des Kolbenarms beim Betrieb für mindestens einen Abschnitt des Bewegungsbereichs nur eines des ersten und des zweiten bewegbaren Elements bewegt.

11. Aufhängungseinheit (100, 200) gemäß einem der vorhergehenden Ansprüche, wobei der Körper einen Hauptzylinder (120) mit der Primärkammer und einen Hilfszylinder (130) mit der zweiten Gasfederkammer (162) und der zweiten Dämpfungskammer (138) umfasst, wobei sich der Verteiler (240) oder der Abschnitt (140) des Strömungsweges durch eine Wand des Körpers zwischen dem Hauptzylinder (120) und dem Hilfszylinder (130) erstreckt.

12. Aufhängungseinheit (100, 200) gemäß Anspruch 11, wobei der Hauptzylinder (120) und der Hilfszylinder (130) nebeneinander angeordnet sind.

13. Aufhängungseinheit (100, 200) gemäß Anspruch 12, wobei sich der Verteiler (240) oder der Abschnitt (140) des Weges zwischen einer Öffnung in einer nah gelegenen Endwand (125) des Hauptzylinders (120), die einem fern gelegenen Ende des Primärzylinders gegenüberliegt, das den Kolbenarm aufnimmt, und einer Öffnung in einer nah gelegenen Endwand des Hilfszylinders erstreckt.

14. Verfahren zum Modifizieren einer Aufhängungseinheit (300), umfassend:
einen Körper (310), der eine Primärkammer (324) zum Aufnehmen eines Primärfluids definiert;
einen Kolbenarm (350) mit einem Kolbenende (354), das in dem Körper aufgenommen ist, um auf das Primärfluid in der Primärkammer einzuwirken, wobei der Kolbenarm relativ zu dem Körper zwischen mindestens einer ausgefahrenen Konfiguration und einer eingefahrenen Konfiguration bewegbar ist;
eine erste Gasfederkammer (360) innerhalb des Kolbenarms und ein erstes bewegbares Element, um ein Volumen der ersten Gasfederkammer zu verändern;
eine zweite Gasfederkammer (362), die von dem Kolbenarm getrennt ist, und ein zweites bewegbares Element, um das Volumen der zweiten Gasfederkammer zu verändern;
wobei in mindestens einer von der ausgefahrenen Konfiguration und der eingefahrenen Konfiguration des Kolbenarms eine erste Dämpfungskammer (358) angrenzend an das erste bewegbare Element definiert ist und eine zweite Dämpfungskammer angrenzend an das zweite bewegbare Element definiert ist;
die Aufhängungseinheit einen Dämpfungsdurchgang (364) zwischen der Primärkammer und der ersten Dämpfungskammer umfasst; und
**dadurch gekennzeichnet, dass** sie einen Strömungsweg umfasst, der sich von der zweiten Dämpfungskammer zur Primärkammer erstreckt, wobei sich ein Abschnitt (340) des Strömungsweges durch eine Wand des Körpers erstreckt;
wobei das Verfahren umfasst:
Installieren einer Leitung (146) zur Fluidverbindung zwischen der ersten Dämpfungskammer und der zweiten Dämpfungskammer so, dass die zweite Dämpfungskammer über die erste Dämpfungskammer in Fluidverbindung mit der Primärkammer steht;
wobei die Leitung (146) so installiert wird, dass sie den Strömungsweg in die erste Dämpfungskammer verlängert, um die Primärkammer zu umgehen; und
Ersetzen oder Ändern des Kolbenendes (354), sodass sich die Leitung (164) durch dieses hindurch erstreckt, und so, dass das Kolbenende relativ zur Leitung bewegbar ist.

15. Verfahren gemäß Anspruch 14, wobei die modifizierte Aufhängungseinheit gemäß einem der Ansprüche 1 bis 13 ausgeführt ist.

## Revendications

1. Unité de suspension (200), comprenant :
un corps (110) définissant une chambre primaire (124) pour contenir un fluide primaire ;
un bras de piston (150) ayant une extrémité de piston (154) reçue dans le corps pour agir sur le fluide primaire dans la chambre primaire, dans laquelle le bras de piston est mobile relativement au corps entre au moins une configuration étendue et une configuration rétractée ;
une première chambre de ressort à gaz (160) à l'intérieur du bras de piston et un premier élément mobile (156) pour varier un volume de la première chambre de ressort à gaz ;
une seconde chambre de ressort à gaz (162) séparée du bras de piston et un second élément mobile (136) pour varier un volume de la seconde chambre de ressort à gaz ;
dans laquelle, dans au moins une de la configuration étendue et de la configuration rétractée du bras de piston, une première chambre d'amortissement (158) est définie de façon adjacente au premier élément mobile et une seconde chambre d'amortissement (138) est définie de façon adjacente au second élément mobile ;
**caractérisée en ce que** la première chambre d'amortissement et la seconde chambre d'amortissement sont chacune en communication fluidique avec la chambre primaire par l'intermédiaire d'un collecteur (240) et d'une voie de passage d'amortissement commune (264) définie dans le corps pour recevoir le fluide primaire ;
dans laquelle le collecteur est formé dans le corps, et comprend un orifice d'amortissement correspondant à la voie de passage d'amortissement commune, pour communication fluidique mutuelle entre la première chambre d'amortissement, la seconde chambre d'amortissement, et la chambre primaire, par l'intermédiaire de la voie de passage d'amortissement commune ; et
dans laquelle la première chambre d'amortissement est en communication fluidique avec la seconde chambre d'amortissement par l'intermédiaire d'un conduit (146) s'étendant depuis le collecteur à travers l'extrémité de piston, l'extrémité de piston étant mobile relativement au conduit.

2. Unité de suspension (100), comprenant :
un corps (110) définissant un chambre primaire (124) pour contenir un fluide primaire ;
un bras de piston (150) ayant une extrémité de piston (154) reçue dans le corps pour agir sur le fluide primaire dans la chambre primaire, dans laquelle le bras de piston est mobile relativement au corps entre au moins an configuration étendue et a configuration rétractée ;
une première chambre de ressort à gaz (160) à l'intérieur du bras de piston et un premier élément mobile (156) pour varier un volume de la première chambre de ressort à gaz ;
une seconde chambre de ressort à gaz (162) séparée du bras de piston et un second élément mobile (136) pour varier un volume de la seconde chambre de ressort à gaz ;
dans laquelle, dans au moins une de la configuration étendue et de la configuration rétractée du bras de piston, une première chambre d'amortissement (158) est définie de façon adjacente au premier élément mobile et une seconde chambre d'amortissement (138) est définie de façon adjacente au second élément mobile ;
**caractérisée en ce que** la première chambre d'amortissement et la seconde chambre d'amortissement sont chacune en communication fluidique avec la chambre primaire par l'intermédiaire d'une voie de passage d'amortissement commune (164) définie dans l'extrémité de piston pour recevoir le fluide primaire ;
dans laquelle la première chambre d'amortissement est en communication fluidique avec la seconde chambre d'amortissement par l'intermédiaire d'un conduit (146) s'étendant à travers l'extrémité de piston, et dans laquelle l'extrémité de piston est mobile relativement au conduit ;
dans laquelle le conduit définit une partie d'une voie de passage d'écoulement entre la première chambre d'amortissement et la seconde chambre d'amortissement, et dans laquelle une portion (140) de la voie de passage d'écoulement s'étend à travers une paroi du corps.

3. Unité de suspension (100) selon la revendication 2, dans laquelle la seconde chambre d'amortissement est agencée pour recevoir le fluide primaire à partir de la chambre primaire par l'intermédiaire de la première chambre d'amortissement.

4. Unité de suspension (100, 200) selon une quelconque revendication précédente, dans laquelle un mouvement du premier élément mobile pour comprimer la première chambre de ressort à gaz entraîne la formation ou l'agrandissement de la première chambre d'amortissement.

5. Unité de suspension (100, 200) selon une quelconque revendication précédente, dans laquelle un mouvement du second élément mobile pour comprimer la seconde chambre de ressort à gaz entraîne la formation ou l'agrandissement de la seconde chambre d'amortissement.

6. Unité de suspension (100, 200) selon une quelconque revendication précédente, dans laquelle il y a un joint d'étanchéité entre l'extrémité de piston et le conduit.

7. Unité de suspension (100, 200) selon une quelconque revendication précédente, dans laquelle le conduit est un composant distinct assemblé sur le corps.

8. Unité de suspension (100, 200) selon une quelconque revendication précédente, dans laquelle le conduit est assemblé de façon filetée sur le corps.

9. Unité de suspension (100, 200) selon une quelconque revendication précédente, dans laquelle la chambre primaire contient un fluide primaire ; la première chambre de ressort à gaz contient un premier gaz compressible ; et la seconde chambre de ressort à gaz contient un second gaz compressible.

10. Unité de suspension (100, 200) selon la revendication 9, dans laquelle le bras de piston est mobile au sein d'une plage de déplacement relativement au corps pour faire en sorte que le fluide primaire s'écoule entre la chambre primaire et les première et seconde chambres d'amortissement, et dans laquelle les première et seconde chambres de ressort à gaz sont remplies de telle sorte que, durant l'utilisation, pour au moins une portion de la plage de déplacement, seulement un des premier et second éléments mobiles se meuve en réponse au mouvement du bras de piston.

11. Unité de suspension (100, 200) selon une quelconque revendication précédente, dans laquelle le corps comprend un cylindre principal (120) comprenant la chambre primaire et un cylindre auxiliaire (130) comprenant la seconde chambre de ressort à gaz (162) et la seconde chambre d'amortissement (138), dans laquelle le collecteur (240) ou la portion (140) de la voie de passage d'écoulement s'étend à travers une paroi du corps entre le cylindre principal (120) et le cylindre auxiliaire (130).

12. Unité de suspension (100, 200) selon la revendication 11, dans laquelle le cylindre principal (120) et le cylindre auxiliaire (130) sont disposés côte à côte.

13. Unité de suspension (100, 200) selon la revendication 12, dans laquelle le collecteur (240) ou la portion (140) de la voie de passage s'étend entre un orifice dans une paroi d'extrémité proximale (125) du cylindre principal (120) qui s'oppose à une extrémité distale du cylindre primaire qui reçoit le bras de piston et un orifice dans une paroi d'extrémité proximale du cylindre auxiliaire.

14. Procédé de modification d'une unité de suspension (300), comprenant :
un corps (310) définissant une chambre primaire (324) pour contenir un fluide primaire ;
un bras de piston (350) ayant une extrémité de piston (354) reçue dans le corps pour agir sur le fluide primaire dans la chambre primaire, dans lequel le bras de piston est mobile relativement au corps entre au moins une configuration étendue et une configuration rétractée ;
une première chambre de ressort à gaz (360) à l'intérieur du bras de piston et un premier élément mobile pour varier un volume de la première chambre de ressort à gaz ;
une seconde chambre de ressort à gaz (362) séparée du bras de piston et un second élément mobile pour varier un volume de la seconde chambre de ressort à gaz ;
dans lequel, dans au moins une de la configuration étendue et de la configuration rétractée du bras de piston, une première chambre d'amortissement (358) est définie de façon adjacente au premier élément mobile et une seconde chambre d'amortissement est définie de façon adjacente au second élément mobile ;
l'unité de suspension comprenant une voie de passage d'amortissement (364) entre la chambre primaire et la première chambre d'amortissement ; et
**caractérisé en ce qu'**il comprend une voie de passage d'écoulement s'étendant depuis la seconde chambre d'amortissement jusqu'à la chambre primaire, une portion (340) de la voie de passage d'écoulement s'étendant à travers une paroi du corps ;
le procédé comprenant :
l'installation d'un conduit (146) pour la communication fluidique entre la première chambre d'amortissement et la seconde chambre d'amortissement, de telle sorte que la seconde chambre d'amortissement soit en communication fluidique avec la chambre primaire par l'intermédiaire de la première chambre d'amortissement ;
dans lequel le conduit (146) est installé pour étendre la voie de passage d'écoulement dans la première chambre d'amortissement pour contourner la chambre primaire ; et
le remplacement ou la modification de l'extrémité de piston (354) pour que le conduit (164) s'étende à travers celle-ci, et de telle sorte que l'extrémité de piston soit mobile relativement au conduit.

15. Procédé selon la revendication 14, dans lequel l'unité de suspension modifiée est selon l'une quelconque des revendications 1 à 13.
